# FASCICULE DE BREVET EUROPEEN

(11) **EP 3 633 495 B1**
(45) Date de publication et mention de la délivrance du brevet: **27.10.2021**
(21) Numéro de dépôt: 19197951.7
(22) Date de dépôt: 18.09.2019
(51) Int. Cl.: G06F 1/3296, G06F 21/50

(54) **PROCÉDÉ DE GESTION D'UNE ALIMENTATION DVFS ET SYSTÈME CORRESPONDANT**
VERFAHREN ZUR VERWALTUNG EINER DVFS-STROMVERSORGUNG, UND ENTSPRECHENDES SYSTEM
METHOD FOR MANAGING A DVFS POWER SUPPLY AND CORRESPONDING SYSTEM

(30) Priorité: 01.10.2018 FR 1859052
(43) Date de publication de la demande: 08.04.2020
(73) Titulaire: STMicroelectronics (Grand Ouest) SAS, 72100 Le Mans (FR)
(72) Inventeur: ROSAY, Arnaud, 72210 VOIVRES LES LE MANS (FR); LEJEUNE, Gérald, 72200 MAREIL-SUR-LOIR (FR); GRAUX, Jean Nicolas, 72530 Yvre l'Eveque (FR); LEBRETON, Olivier Claude, 72220 SAINT MARS D'OUTILLE (FR)
(74) Mandataire: Casalonga

(56) Documents cités:
- SHENG ZHANG ET AL: "Blacklist Core : Machine-Learning Based Dynamic Operating-Performance-Point Blacklisting for Mitigating Power-Management Security Attacks", PROCEEDINGS OF THE INTERNATIONAL SYMPOSIUM ON LOW POWER ELECTRONICS AND DESIGN , ISLPED '18, 25 juillet 2018 (2018-07-25), pages 1-6, XP055600603, New York, New York, USA DOI: 10.1145/3218603.3218624 ISBN: 978-1-4503-5704-3

## Description

Des modes de mise en œuvre et de réalisation concernent la gestion d'une alimentation du type ajustement dynamique de tension-fréquence « DVFS » (pour « Dynamic Voltage-Frequency Scaling » selon le terme anglais usuel), de systèmes sur puce.

Les systèmes sur puce « SOC » (pour « System on Chip » en anglais) requièrent des dispositifs de sécurité pour protéger les données confidentielles et les informations sensibles contre copie de contenus propriétaires. Les domaines des objets connectés et de l'automobile en particulier, y sont particulièrement sensibles.

La publication de Tang et al. "CLKscrew: Exposing the perils of security-oblivious energy management" ISBN : 978-1-931971-40-9, présentée lors du 26e Symposium USENIX sur la sécurité (août 2017), expose une faille de sécurité de systèmes sur puce actuels.

La faille de sécurité mentionnée ci-dessus concerne les systèmes alimentés par une technique d'ajustement dynamique de la tension et de la fréquence DVFS.

Les systèmes sur puce peuvent comprendre des unités de calcul dans lesquelles un environnement sécurisé est conçu pour ne pas être accessible sans certification, et un environnement non-sécurisé est accessible par l'extérieur, par exemple pour y exécuter des applications logicielles, ou établir une communication avec appareil tiers. Par exemple l'environnement sécurisé comprend des mécanismes matériels de protection aux interfaces d'entrée-sortie, tels que des registres permettant de filtrer des données certifiées ou non. En outre, la sécurité des communications avec l'environnement sécurisé repose essentiellement sur des algorithmes de chiffrement tels que le standard de chiffrement avancé « AES » ou le standard de chiffrement « RSA ».

L'environnement sécurisé est usuellement désigné par le terme anglais « Trusted Execution Environment », et l'environnement non-sécurisé est usuellement désignée par le terme anglais « Rich Execution Environment ». Les deux environnements peuvent appartenir à une même unité de calcul telle qu'un microprocesseur.

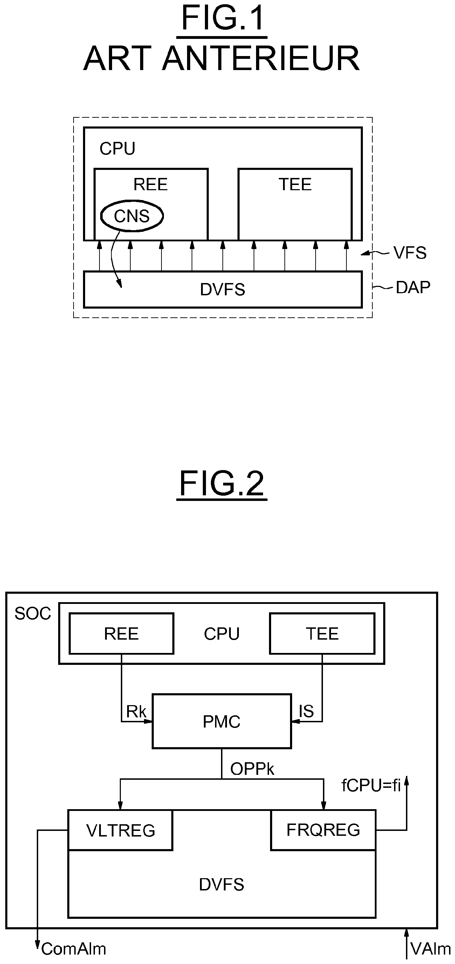

La figure 1 illustre un exemple de système comprenant un environnement sécurisé TEE et un environnement non-sécurisé REE appartenant à une même unité de calcul CPU et partageant un domaine d'alimentation DAP, du type à ajustement dynamique de la tension et de la fréquence DVFS.

Dans le domaine d'alimentation partagé DAP, des variations VFS de tension et de fréquence peuvent être commandées par l'environnement non-sécurisé REE. Par exemple l'environnement non-sécurisé est régi par un système d'exploitation tel que Linux qui prévoit ce type de commande de l'alimentation DVFS.

La commande de l'alimentation DVFS par l'environnement non-sécurisé REE est utile pour optimiser la consommation d'énergie, puisque dynamiquement adaptée aux performances de chaque utilisation du système.

Cependant, la publication de Tang et al. mentionnée ci-avant révèle qu'il existe une attaque consistant à modifier les tensions et fréquences VFS de l'alimentation DVFS par une instruction de code non-sécurisée CNS, depuis l'environnement non-sécurisé REE. La variation VFS ainsi commandée permet d'introduire une erreur ciblée lors d'un traitement dans l'environnement sécurisé TEE, qui, en étant précisément synchronisée sur une opération donnée, permet de casser le chiffrement sur lequel repose la sécurité de l'environnement sécurisé TEE.

En d'autres termes, l'alimentation DVFS est utilisée par l'environnement non-sécurisé REE pour mettre l'environnement sécurisé TEE à la limite de son alimentation fonctionnelle pour créer une erreur de coordination temporelle dans la logique de l'environnement sécurisé.

Par « casser le chiffrement », on entend par exemple une reconstitution d'une clé secrète de chiffrement. Ensuite, avec la clé de chiffrement, un logiciel tiers « non-sécurisé » peut accéder à l'environnement sécurisé TEE et bénéficier de ses privilèges.

On remarquera que cette attaque est mise en œuvre exclusivement de façon logicielle, et pourrait être réalisée à distance via un accès réseau, ce qui la rend d'autant plus dangereuse.

Par ailleurs, on remarquera que des paramètres clés de l'attaque sont d'une part la commande de l'alimentation DVFS par l'environnement non-sécurisé REE, et d'autre part un chronométrage précis pour la synchronisation de l'introduction d'une erreur avec une opération donnée de l'environnement sécurisé TEE.

Dans la publication mentionnée ci-avant, Tang et al. proposent des solutions de prévention d'une telle attaque.

Il a été proposé d'introduire au niveau matériel des limites opérationnelles aux variations possibles de l'alimentation DVFS, afin de ne pas pouvoir générer de couple tension-fréquence introduisant un dysfonctionnement.

Cependant, d'une part, les limites opérationnelles peuvent varier au sein d'une même production, notamment en raison d'aléas de fabrication, et sont donc difficilement déterminables a priori.

D'autre part, les alimentations DVFS sont généralement utilisées par plusieurs systèmes ayant des contraintes et des besoins différents, et cela n'est pas compatible avec des valeurs matériellement gelées.

Il a aussi été proposé d'utiliser différents domaines d'alimentation pour l'environnement sécurisé TEE et pour l'environnement non-sécurisé REE. Une alimentation matériellement séparée est utilisée lorsque l'environnement sécurisé TEE est actif.

L'environnement sécurisé TEE et l'environnement non-sécurisé REE fonctionnant souvent sur le même processeur CPU, une telle solution s'avère complexe à exploiter. En outre, la surface utilisée pour réaliser l'alimentation dédiée à l'environnement sécurisé TEE n'est pas négligeable, ce qui est problématique.

Il a aussi été proposé d'introduire des programmes de randomisation dans l'environnement sécurisé TEE, qui ajoutent un nombre aléatoire d'instructions de non-opération dans les algorithmes. Les temps d'exécution varient et compliquent la synchronisation de l'attaque.

Cette solution ne protège pas l'environnement sécurisé TEE d'une attaque qui utilise une forme de profilage d'exécution. En outre, cette solution introduit des latences et des pénalités de performance de l'environnement sécurisé TEE.

Il a enfin été proposé d'introduire des redondances de certaines exécutions et de contrôler ces redondances. Si l'un des résultats est différent, à cause d'une erreur introduite via l'alimentation DVFS, l'erreur peut être détectée.

Cette solution introduit des latences et des pénalités de performance. Exécuter plusieurs fois un algorithme augmente nécessairement le temps d'exécution et, outre ce retard, la consommation d'énergie en est affectée.

La publication de Sheng Zhang et al. "Blacklist Core: Machine-Learning Based Dynamic Operating-Performance-Point Blacklisting for Mitigating Power-Management Security Attacks", PROCEEDINGS OF THE INTERNATIONAL SYMPOSIUM ON LOW POWER ELECTRONICS AND DESIGN, ISLPED'18, 25 juillet 2018, décrit un algorithme, basé sur un auto-apprentissage, permettant d'écarter des commandes de réglages de fréquences potentiellement dysfonctionnelles.

Des modes de mise en œuvre et de réalisation proposent de résoudre le problème de sécurité des systèmes sur puce exposé dans la publication de Tang et al. mentionnée ci-avant, sans subir les désavantages des solutions qui y sont proposées.

Selon un aspect, il est proposé à cet égard un procédé de gestion d'une alimentation du type ajustement dynamique de tension-fréquence, DVFS, d'un système sur puce, le procédé comprenant une génération, par un environnement non-sécurisé du système sur puce, d'une requête de modification de l'alimentation DVFS et une gestion de commande d'alimentation DVFS comprenant :
- une génération, par un environnement sécurisé du système sur puce, d'une instruction sécurisée définissant au moins un point de fonctionnement tension-fréquence autorisé pour l'alimentation DVFS ; et
- un ajustement de l'alimentation DVFS à un point de fonctionnement autorisé, en réponse à la requête de modification de l'alimentation DVFS.

En d'autres termes, quelle que soit la requête de modification de l'alimentation DVFS générée par l'environnement non-sécurisé, l'alimentation DVFS est toujours ajustée à un point de fonctionnement « autorisé » défini par l'environnement sécurisé. Ainsi les environnements sécurisés peuvent définir les points de fonctionnement autorisés conformément à chaque réalisation matérielle, afin de ne pas pouvoir configurer l'alimentation DVFS dans des conditions introduisant un dysfonctionnement du système.

Ainsi la solution proposée selon cet aspect permet d'optimiser l'alimentation DVFS pour chaque système sur puce, en fonction de ses contraintes matérielles, sans modifier l'étage d'alimentation DVFS. Une technologie d'étage d'alimentation DVFS peut ainsi être utilisée avec différents systèmes sur puces mettant en œuvre une gestion de l'alimentation selon cet aspect et toujours bénéficier de sa polyvalence d'alimentation pour différents systèmes.

En outre, la solution proposée selon cet aspect n'a pas d'impact sur les performances du système, car les autres algorithmes de l'environnement sécurisé ne sont pas modifiés.

Selon un mode de mise en œuvre, les points de fonctionnement autorisés pour l'alimentation DVFS sont assignés d'un label respectif par l'environnement sécurisé, et l'alimentation DVFS est ajustée à un point de fonctionnement autorisé si la requête de modification de l'alimentation DVFS comprend le label de ce point de fonctionnement autorisé.

L'alimentation DVFS peut ne pas être ajustée si la requête de modification de l'alimentation DVFS ne comprend pas le label d'un point de fonctionnement autorisé.

Ce mode de mise en œuvre est avantageux en matière de compatibilité avec les systèmes existants, la requête de modification de l'alimentation DVFS de l'environnement non-sécurisé n'ayant à être adaptée que par l'usage de labels.

Selon un mode de mise en œuvre, si la requête de modification de l'alimentation DVFS est différente d'un point de fonctionnement autorisé, alors l'alimentation DVFS est ajustée au point de fonctionnement autorisé le plus proche. Par exemple l'environnement sécurisé reçoit la requête, définit le point de fonctionnement autorisé le plus proche et commande l'alimentation DVFS à ce point de fonctionnement le plus proche.

Ce mode de mise en œuvre est avantageux dans le choix des points de fonctionnements.

Selon un mode de mise en œuvre, ladite instruction sécurisée est générée par l'environnement sécurisé avant un démarrage de l'environnement non-sécurisé.

En effet, l'environnement sécurisé démarre typiquement avant l'environnement non-sécurisé et ce mode de mise en œuvre permet d'assurer l'intégrité de ladite instruction sécurisée définissant les points de fonctionnement autorisés.

Selon un mode de mise en œuvre, l'instruction sécurisée définit un point de fonctionnement tension-fréquence autorisé dédié à l'environnement sécurisé, et, si un traitement sécurisé est exécuté par l'environnement sécurisé, ledit ajustement de l'alimentation DVFS comprend :
- un ajustement de l'alimentation DVFS à ce point de fonctionnement autorisé dédié à l'environnement sécurisé ; et
- une non-modification de l'alimentation DVFS de ce point de fonctionnement autorisé dédié à l'environnement sécurisé, en réponse à la requête de modification de l'alimentation DVFS.

En d'autres termes, ce mode de mise en œuvre laisse toute liberté dans la requête de modification de l'alimentation DVFS, mais n'en tient pas compte si un traitement sécurisé est exécuté par l'environnement sécurisé.

Avantageusement, lorsque l'alimentation DVFS est ajustée au point de fonctionnement autorisé dédié à l'environnement sécurisé, la configuration précédente de l'alimentation DVFS est enregistrée, et lorsque le traitement sécurisé prend fin, la dernière configuration enregistrée est restaurée.

Avantageusement, l'enregistrement de la configuration précédente et la restauration de la dernière configuration enregistrée sont faits par l'environnement sécurisé.

Selon un autre aspect, il est proposé un système sur puce comprenant une alimentation du type ajustement dynamique de tension-fréquence, DVFS, un environnement sécurisé, un environnement non-sécurisé apte à générer une requête de modification de l'alimentation DVFS, et un module de gestion de commande d'alimentation DVFS, dans lequel :
- l'environnement sécurisé est configuré pour générer une instruction sécurisée définissant au moins un point de fonctionnement tension-fréquence autorisé pour l'alimentation DVFS ; et
- le module de gestion de commande d'alimentation est configuré pour ajuster de l'alimentation DVFS à un point de fonctionnement autorisé, en réponse à une requête de modification de l'alimentation DVFS par l'environnement non-sécurisé.

Selon un mode de réalisation, l'environnement sécurisé est configuré pour générer ladite instruction sécurisée assignant un label respectif aux points de fonctionnement autorisés pour l'alimentation DVFS, et dans lequel le module de gestion de commande d'alimentation est configuré pour ajuster l'alimentation DVFS à un point de fonctionnement autorisé si la requête de modification de l'alimentation DVFS comprend le label de ce point de fonctionnement autorisé.

Avantageusement, le module de gestion de commande d'alimentation est configuré pour ne pas ajuster l'alimentation DVFS si la requête de modification de l'alimentation DVFS ne comprend pas le label d'un point de fonctionnement autorisé.

Selon un mode de réalisation, le module de gestion de commande d'alimentation est configuré pour ajuster l'alimentation DVFS au point de fonctionnement autorisé le plus proche d'un point de fonctionnement d'une requête de modification de l'alimentation DVFS, en réponse à cette requête de modification de l'alimentation DVFS.

Selon un mode de réalisation, l'environnement sécurisé est configuré pour générer ladite instruction sécurisée avant un démarrage de l'environnement non-sécurisé.

Selon un mode de réalisation, l'environnement non-sécurisé est configuré pour adresser la requête de modification de l'alimentation DVFS au module de gestion de commande d'alimentation, le module de gestion de commande d'alimentation n'étant configurable que par ladite instruction sécurisée de l'environnement sécurisé.

Selon un mode de réalisation, le module de gestion de commande d'alimentation est incorporé à l'environnement sécurisé et l'environnement non-sécurisé est configuré pour adresser la requête de modification de l'alimentation DVFS à l'environnement sécurisé.

Selon un mode de réalisation, l'environnement sécurisé est configuré pour générer l'instruction sécurisée définissant un point de fonctionnement tension-fréquence autorisé dédié à l'environnement sécurisé pour l'alimentation DVFS, et, si un traitement sécurisé est exécuté par l'environnement sécurisé, le module de gestion de commande d'alimentation est configuré pour :
- ajuster l'alimentation DVFS à ce point de fonctionnement autorisé dédié à l'environnement sécurisé ; et
- ne pas modifier l'alimentation DVFS de ce point de fonctionnement autorisé dédié à l'environnement sécurisé, en réponse à une requête de modification de l'alimentation DVFS.

Avantageusement, l'environnement sécurisé est configuré pour enregistrer la configuration précédente de l'alimentation DVFS, lorsque l'alimentation DVFS est ajustée à ce point de fonctionnement autorisé dédié, et pour restaurer la dernière configuration enregistrée lorsque le traitement sécurisé prend fin.

Il est également proposé un appareil électronique, tel qu'un téléphone portable ou un ordinateur de bord de véhicule, comprenant un système sur puce tel que défini ci-avant, ainsi qu'un dispositif d'alimentation en tension configuré pour fournir une tension d'alimentation commandée par le module de gestion de commande d'alimentation.

Avantageusement, l'appareil électronique comprend en outre un module de communication sans-fil capable de donner à un dispositif tiers un accès à l'environnement non-sécurisé du système sur puce.

D'autres avantages et caractéristiques de l'invention apparaîtront à l'examen de la description détaillée de modes de réalisation et de mise en œuvre, nullement limitatifs, et des dessins annexés sur lesquels :
- la figure 1, précédemment décrite, illustre une faille de sécurité de systèmes sur puce classiques.
- les figures 2 à 6 illustrent différents modes de mise en œuvre et de réalisation de l'invention.

La figure 2 représente un exemple de mode de réalisation d'un système sur puce SOC.

Le système sur puce SOC comprend une alimentation du type ajustement dynamique de tension-fréquence, référencée « DVFS » pour « Dynamic Voltage Frequency Scaling » selon le terme usuel anglais. Le système sur puce comprend un environnement sécurisé TEE et un environnement non-sécurisé REE, qui sont des environnements d'exécution de code logiciel, du type microprocesseur.

Dans cet exemple, l'environnement sécurisé TEE et l'environnement non-sécurisé REE appartiennent à une même unité de calcul CPU, du type microprocesseur. Les communications entre l'environnement sécurisé TEE et le monde extérieur, notamment l'environnement non-sécurisé REE, sont réalisées via une interface matérielle configurée pour empêcher un accès non-autorisé. Il peut également être envisagé que l'environnement sécurisé TEE et l'environnement non-sécurisé REE soient réalisés sur deux unités de calculs matériellement distinctes partageant la même alimentation.

L'alimentation DVFS comprend dans cet exemple un régulateur de fréquence FRQREG et un régulateur de tension VLTREG.

Le régulateur de fréquence FRQREG est configuré pour générer un signal d'horloge f_{CPU}, ayant une fréquence d'horloge, utilisé pour cadencer les opérations de l'unité de calcul CPU. Par exemple le régulateur de fréquence comporte un dispositif de boucle à verrouillage de phase permettant de générer un signal d'horloge périodique à une fréquence modifiable sur commande.

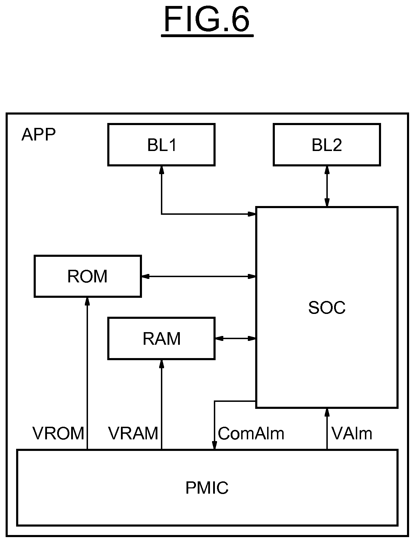

Dans cet exemple, le régulateur de tension VLTREG est configuré pour générer un signal de commande ComAlm de réglage d'une tension d'alimentation, destiné à être commander un circuit externe de génération de tensions d'alimentation « PMIC », pour « Power Management Integrated Circuit » selon le terme anglais usuel. En effet, le circuit de génération de tensions d'alimentation est souvent réalisé par un circuit intégré distinct des systèmes sur puce SOC, et peut être utilisé pour générer et fournir des tensions d'alimentations différentes à différentes éléments d'un appareil comportant le système sur puce SOC. Une tension d'alimentation VAlm fournie au système sur puce provient, dans cet exemple, d'un tel générateur « PMIC ». On pourra se référer à la suite décrite en relation avec la figure 6. Il est également envisageable que la génération de la tension d'alimentation VAlm soit faite par l'alimentation DVFS incorporée au système sur puce SOC, par exemple dans le cas d'un système sur puce SOC destiné à un usage autonome et indépendant.

Ainsi, l'alimentation DVFS est configurée pour fournir une tension d'alimentation VAlm (le cas échéant, par l'intermédiaire du circuit de génération de tension d'alimentation « PMIC ») et un signal d'horloge f_{CPU}. La formulation « couple tension d'alimentation et signal d'horloge », sera abrégée par « couple tension-fréquence », et autrement désignée par le terme « point de fonctionnement » référencé « OPP » pour « Operating Performance Point » selon le terme anglais usuel.

Le système sur puce SOC comporte un module de gestion de commande d'alimentation PMC, configuré pour ajuster l'alimentation DVFS, c'est-à-dire commander des valeurs données pour le couple tension fréquence VAlm-f_{CPU} fourni aux environnements sécurisé TEE et non-sécurisé REE.

Matériellement, le système sur puce SOC est configuré pour que l'alimentation DVFS ne puisse être commandée que par le module de gestion de commande d'alimentation PMC, du moins en ce qui concerne la génération du point de fonctionnement alimentant l'unité de calcul CPU.

Le module de gestion de commande d'alimentation PMC génère une commande de l'alimentation DVFS à un point de fonctionnement autorisé donné OPPk. Le point de fonctionnement autorisé donné OPPk est établi en fonction d'une requête Rk de modification de l'alimentation DVFS générée par l'environnement non-sécurisé REE, et d'une instruction sécurisée IS générée par l'environnement sécurisé TEE.

En effet, l'environnement sécurisé TEE est configuré pour générer l'instruction sécurisée IS définissant au moins un point de fonctionnement tension-fréquence autorisé OPPi pour l'alimentation DVFS.

Le module de gestion de commande d'alimentation PMC est ainsi configuré in situ par l'environnement sécurisé TEE, pour ne générer que des commandes de l'alimentation DVFS à un point de fonctionnement autorisé OPPk, parmi ces points de fonctionnement autorisés OPPi.

Ainsi, en réponse à la requête Rk (provenant de l'environnement non-sécurisé REE) le module de gestion de commande d'alimentation PCM ajuste l'alimentation DVFS à un point de fonctionnement autorisé OPPk.

En d'autres termes, le module de gestion de commande d'alimentation PCM gère les tentatives de commandes de l'alimentation DVFS de façon à ce que l'alimentation DVFS ne fournisse que des points de fonctionnements autorisés OPPi définis par l'environnement sécurisé TEE.

Ainsi les méthodes de piratage de l'environnement sécurisé TEE qui comprennent notamment une génération de faute causée par une alimentation à un couple tension-fréquence dysfonctionnel pour le système sur puce, sont impossibles dans ce système sur puce SOC.

Si une requête de modification de l'alimentation DVFS provient de l'environnement sécurisé TEE, la requête peut être traitée de la même façon par le module de gestion de commande d'alimentation PMC.

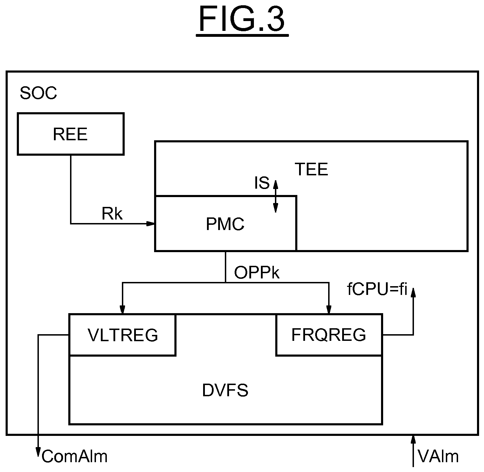

La figure 3 représente un exemple de variante du mode de réalisation du système sur puce SOC décrit en relation avec la figure 2. Les éléments communs entre les exemples des figures 2 et 3 supportent les mêmes références et ne seront pas détaillés à nouveau.

Dans cette variante, le module de gestion de commande d'alimentation PMC est incorporé à l'environnement sécurisé TEE. Ainsi, l'environnement non-sécurisé REE est configuré pour adresser la requête Rk de modification de l'alimentation DVFS à l'environnement sécurisé TEE.

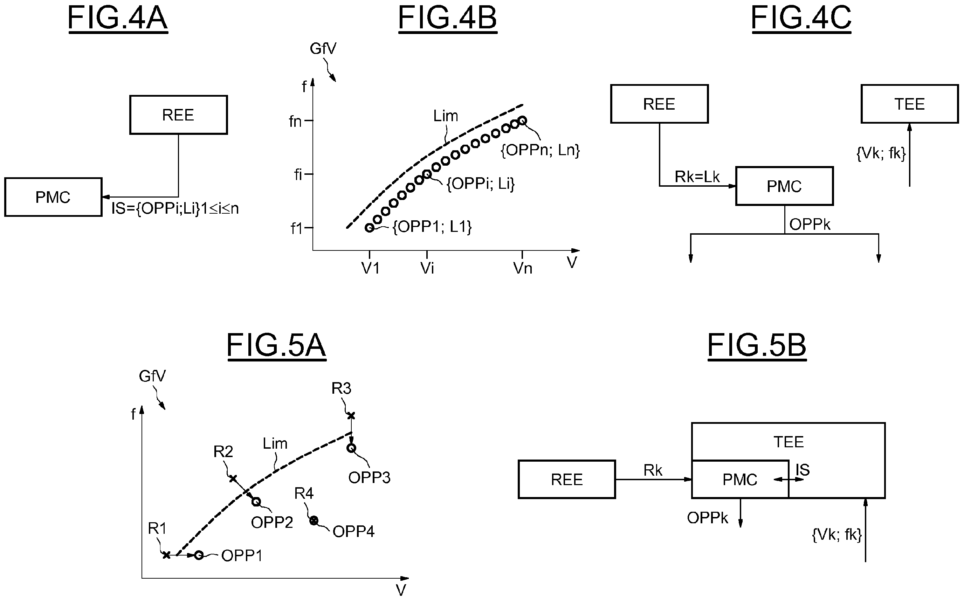

Par conséquent des communications de l'environnement non-sécurisé REE avec l'environnement sécurisé TEE sont mises en œuvre pour ajuster l'alimentation DVFS. Ces communication sont mises en œuvre par l'intermédiaire des interfaces matérielles de protection de l'environnement sécurisé TEE, et sont généralement plus lentes que les communications non-sécurisées. Cela étant, ce mode de mise en œuvre permet par ailleurs une gestion de commande d'alimentation avantageuse sur le choix des points de fonctionnements autorisés. Ce mode de mise en œuvre est décrit dans la suite en relation avec les figures 5A et 5B.

L'instruction sécurisée IS correspond ici à une instruction interne de l'environnement sécurisé TEE, par exemple un résultat calculatoire transmis à une interface de génération de signaux de commande des régulateurs de tension VLTREG et de fréquence FRQREG de l'alimentation DVFS.

D'autre part, l'environnement sécurisé TEE et l'environnement non-sécurisé REE ont été représentés comme deux unités de calcul distinctes, par exemple du type microprocesseur. Bien entendu, cette variante peut être envisagée pour un environnement sécurisé TEE et un environnement non-sécurisé REE réalisés au sein d'une même unité de calcul du type microprocesseur.

Les figures 4A, 4B et 4C illustrent un exemple de mode de mise en œuvre et de réalisation d'une gestion de commande d'alimentation à ajustement dynamique de tension-fréquence.

La figure 4A illustre la génération, par l'environnement sécurisé TEE, de l'instruction sécurisée IS définissant au moins un point de fonctionnement tension-fréquence autorisé OPPi pour l'alimentation DVFS. Par exemple n point de fonctionnement sont définis et 1≤i≤n.

Habituellement, l'environnement sécurisé TEE commande les routines de démarrage des systèmes sur puce SOC, et par conséquent l'environnement sécurisé TEE est actif avant l'environnement non-sécurisé REE. Ainsi, l'instruction sécurisée IS peut être générée par l'environnement sécurisé TEE avant le démarrage de l'environnement non-sécurisé REE. Cela permet d'assurer une protection supplémentaire empêchant un potentiel piratage avant la génération de l'instruction sécurisée IS.

Dans ce mode de mise en œuvre, l'instruction sécurisée IS définit les points de fonctionnement autorisés OPPi (1≤i≤n) pour l'alimentation DVFS et les assigne d'un label respectif Li (1≤i≤n).

La figure 4B représente un graphique GfV de couples de tensions V et de fréquences f, sur lequel est tracée une courbe Lim montrant la limite supérieure des fréquences f possibles en fonction de la tension V, au-delà de laquelle la logique de l'environnement sécurisé TEE est dysfonctionnelle.

Ainsi, tous les couples tension-fréquence situés au-dessus de la courbe Lim ne sont pas des conditions opérationnelles de l'environnement sécurisé TEE.

Le graphique GfV permet d'illustrer un exemple de définition, par l'environnement sécurisé TEE, des points de fonctionnement autorisés et assignés d'un label respectif {OPPi; Li}_{1≤i≤n}, selon ce mode de mise en œuvre et de réalisation.

Chaque point de fonctionnement autorisé OPPi (1≤i≤n) comprend des coordonnées en tension Vi (1≤i≤n) et en fréquence fi (1≤i≤n) définies pour être sous la courbe Lim de façon à toujours fournir une alimentation opérationnelle à l'environnement sécurisé TEE.

Le label Li (1≤i≤n) respectivement assigné à chaque point de fonctionnement autorisé OPPi (1≤i≤n) est un mot numérique de nature quelconque, par exemple un nombre binaire arbitraire ou un mot numérique codé.

La figure 4C représente une génération, par un environnement non-sécurisé REE, de la requête Rk de modification de l'alimentation DVFS, et la transmission de cette requête Rk au module de gestion de commande d'alimentation PMC.

Ainsi, la gestion de commande d'alimentation DVFS comprend une commande OPPk d'ajustement de l'alimentation DVFS à un point de fonctionnement autorisé OPPk (1≤k≤n), si la requête Rk de modification de l'alimentation DVFS comprend le label Lk (1≤k≤n) de ce point de fonctionnement autorisé OPPk.

Et par exemple, l'alimentation DVFS n'est pas ajustée si la requête Rk de modification de l'alimentation DVFS ne comprend pas le label Li (1≤i≤n) d'un point de fonctionnement autorisé OPPi.

Ainsi, l'environnement sécurisé TEE est nécessairement alimenté par un couple tension-fréquence {Vk ; fk} opérationnel.

L'environnement non-sécurisé REE est ainsi configuré pour adresser la requête Rk de modification de l'alimentation DVFS au module de gestion de commande d'alimentation PMC. Bien entendu, l'environnement non-sécurisé REE générant la requête Rk doit être apte à communiquer le label de la façon qui a été définie par l'environnement sécurisé TEE.

Le module de gestion de commande d'alimentation PMC n'étant configurable que par ladite instruction sécurisée IS de l'environnement sécurisé TEE, une requête Rk frauduleuse visant introduire une erreur dans l'environnement sécurisé ne peut pas être exécutée.

Ce mode de mise en œuvre et de réalisation, décrit en relation avec les figures 4A, 4B et 4C, permet de se prémunir contre les méthodes de piratage de l'environnement sécurisé TEE qui comprennent notamment une génération de faute causée par une modification de l'alimentation DVFS depuis l'environnement non-sécurisé REE.

En outre, ce mode de mise en œuvre et de réalisation n'a aucune incidence sur le rendement par rapport aux systèmes existants, et ne requiert qu'une légère modification de l'environnement non-sécurisé REE pour générer des requêtes Ri de modification de l'alimentation DVFS.

Les figures 5A et 5B illustrent un exemple d'un autre mode de mise en œuvre et de réalisation d'une gestion de commande d'alimentation à ajustement dynamique de tension-fréquence.

La figure 5A représente le graphique GfV de couples de tensions V et de fréquences f, tel que présenté ci-avant en relation avec la figure 4B, ainsi que la courbe Lim montrant la limite de des fréquences f possibles en fonction de la tension V, au-delà de laquelle la logique de l'environnement sécurisé TEE est dysfonctionnelle.

Dans ce mode de mise en œuvre et de réalisation, si la requête Rk (1≤k≤4) de modification de l'alimentation DVFS est différente d'un point de fonctionnement autorisé OPPi, alors l'alimentation DVFS est ajustée au point de fonctionnement autorisé le plus proche OPPk (1≤k≤4). Si la requête R4 est comprise dans la définition des points de fonctionnements autorisés OPPi, l'ajustement de l'alimentation DVFS peut correspondre à l'application immédiate de ladite requête.

Comme représenté par la figure 5B, ce mode de mise en œuvre et de réalisation est bien adapté à une configuration dans laquelle le module de gestion de commande d'alimentation PMC est incorporé à l'environnement sécurisé TEE. L'environnement non-sécurisé REE est donc configuré pour adresser la requête Rk de modification de l'alimentation DVFS à l'environnement sécurisé TEE.

En effet, la capacité de calcul de l'environnement sécurisé TEE peut être utile pour évaluer le point de fonctionnement autorisé OPPi le plus proche de la requête Rk.

Par exemple l'instruction sécurisée IS peut définir les points de fonctionnement tension-fréquence autorisé OPPi pour l'alimentation DVFS comme tout couple tension-fréquence situé sous la courbe Lim.

Ainsi, l'environnement sécurisé TEE est nécessairement alimenté par un couple tension-fréquence {Vk ; fk} opérationnel.

Une modélisation de la courbe Lim peut être requise, et la distance la plus petite dans l'espace du graphique tension-fréquence GfV doit être calculée. Par exemple, trois manières de calculer ladite distance la plus petite sont illustrées par la figure 5A :
1) la distance la plus petite entre le point de fonctionnement autorisé OPP1 et la requête R1 est calculée seulement sur la coordonnée tension V. Cela est adapté pour des points de fonctionnement à fréquence et tension faibles.
2) la distance la plus petite entre le point de fonctionnement autorisé OPP2 et la requête R2 est calculé selon la norme euclidienne ou équivalente sur les deux coordonnées tension V et fréquence f. Cela est adapté pour tout point de fonctionnement à fréquence et tension non-extrêmes.
3) la distance la plus petite entre le point de fonctionnement autorisé OPP3 et la requête R3 est calculée seulement sur la coordonnée fréquence f. Cela est adapté pour des points de fonctionnement à fréquence et tension élevées.

Bien entendu toute approche de calcul est envisageable.

En outre, deux points OPPk et OPPi équidistants de Rk peuvent être départagés selon que l'on préfère assurer la performance en termes de vitesse ou une réduction de la consommation.

Ainsi, ladite instruction sécurisée IS définissant les points de fonctionnement tension-fréquence autorisé OPPi peut correspondre ici à une instruction interne de l'environnement sécurisé TEE, tel qu'un résultat de calcul, pour générer la commande OPPk de l'alimentation DVFS, comme décrit ci-avant en relation avec la figure 3.

Bien entendu, une configuration dans laquelle le module de gestion de commande d'alimentation PMC n'est pas incorporé à l'environnement sécurisé TEE est envisageable. Le module de gestion de commande d'alimentation PMC doit alors être capable d'évaluer le point de fonctionnement autorisé le plus proche de la requête. Cela étant cette évaluation peut, au besoin, être très simple en matière de quantité de calculs requis.

En d'autres termes, selon un mode de mise en œuvre et de réalisation, l'environnement non-sécurisé REE appelle un service de l'environnement sécurisé TEE pour changer de point de fonctionnement, et c'est l'environnement sécurisé TEE qui décide quel point de fonctionnement commander pour garantir que le système sur puce SOC sera opérationnel.

La génération et le mode de communication de la requête Ri, par l'environnement non-sécurisé REE, auront à être adaptés.

Ce mode de mise en œuvre et de réalisation permet de se prémunir contre les méthodes de piratage de l'environnement sécurisé TEE qui comprennent notamment une génération de faute causée par une modification de l'alimentation DVFS depuis l'environnement non-sécurisé REE.

Il est maintenant fait référence de nouveau à la figure 2.

En alternative aux modes de mise en œuvre et de réalisation décrits ci-avant en relation avec les figures 4A, 4B, 4C et les figures 5A, 5B, il est envisagé que l'environnement sécurisé TEE impose un point de fonctionnement autorisé OPPi, dédié à l'environnement sécurisé TEE, et invariable tout le temps qu'un traitement est exécuté par l'environnement sécurisé TEE. Le point de fonctionnement autorisé dédié à l'environnement sécurisé TEE peut par exemple être l'un des points de fonctionnement autorisé {OPPi}_{1≤i≤n} représenté sur la figure 4B, et par exemple choisi en fonction des performances requises pour l'exécution dudit traitement.

A cet égard le module de gestion de commande d'alimentation PMC est configuré pour ajuster l'alimentation DVFS à ce point de fonctionnement autorisé OPPi dédié à l'environnement sécurisé TEE, et pour ne pas modifier l'alimentation DVFS de ce point de fonctionnement autorisé OPPi dédié à l'environnement sécurisé TEE, en réponse à la requête Rk de modification de l'alimentation DVFS générée par l'environnement non-sécurisé.

L'environnement sécurisé TEE est avantageusement configuré pour enregistrer la configuration précédente de l'alimentation DVFS, lorsque l'alimentation DVFS est ajustée à ce point de fonctionnement autorisé OPPi dédié, et pour restaurer la dernière configuration enregistrée lorsque le traitement sécurisé prend fin.

Ainsi, aucun changement n'est nécessaire dans la génération de la requête par l'environnement non-sécurisé REE, aucun impact sur les performances n'est ressenti.

Le module de gestion de commande d'alimentation PMC est ainsi configuré comme un mécanisme matériel pour verrouiller et déverrouiller dynamiquement l'accès à l'alimentation DVFS par l'environnement non-sécurisé REE, en fonction de l'instruction sécurisée IS.

La figure 6 représente un exemple d'appareil électronique APP, comportant un mode de réalisation de système sur puce SOC.

L'appareil électronique APP est par exemple téléphone portable ou un ordinateur de bord de véhicule, et comprend un système sur puce SOC selon l'un des mode de réalisation décrit ci-avant, ainsi qu'un dispositif d'alimentation en tension PMIC configuré pour fournir une tension d'alimentation VAlm commandée ComAlm par le module de gestion de commande d'alimentation PMC.

Par ailleurs, l'appareil APP comprend de façon habituelle notamment une mémoire vive RAM, une mémoire non-volatile ROM et des modules BL1, BL2 de fonctions diverses. Le dispositif d'alimentation en tension PMIC est aussi configuré pour notamment fournir des tensions d'alimentation VRAM, VROM aux mémoires RAM et ROM.

L'appareil électronique APP peut comprendre un module de communication sans-fil BL1 capable de donner à un dispositif tiers un accès à l'environnement non-sécurisé REE du système sur puce SOC.

## Revendications

1. Procédé de gestion d'une alimentation du type ajustement dynamique de tension-fréquence, DVFS, d'un système sur puce, le procédé comprenant une génération, par un environnement non-sécurisé (REE) du système sur puce, d'une requête (Rk) de modification de l'alimentation DVFS et une gestion de commande d'alimentation DVFS comprenant :
- une génération, par un environnement sécurisé (TEE) du système sur puce, d'une instruction sécurisée (IS) définissant au moins un point de fonctionnement tension-fréquence autorisé (OPPi) pour l'alimentation DVFS ; et
- un ajustement de l'alimentation DVFS à un point de fonctionnement autorisé (OPPk), en réponse à la requête (Rk) de modification de l'alimentation DVFS.

2. Procédé selon la revendication 1, dans lequel les points de fonctionnement autorisés (OPPi) pour l'alimentation DVFS sont assignés d'un label respectif (Li) par l'environnement sécurisé (TEE), et dans lequel l'alimentation DVFS est ajustée à un point de fonctionnement autorisé (OPPk) si la requête (Rk) de modification de l'alimentation DVFS comprend le label (Lk) de ce point de fonctionnement autorisé (OPPk).

3. Procédé selon la revendication 2, dans lequel l'alimentation DVFS n'est pas ajustée si la requête (Rk) de modification de l'alimentation DVFS ne comprend pas le label (Li) d'un point de fonctionnement autorisé (OPPi).

4. Procédé selon la revendication 1, dans lequel si la requête (Rk) de modification de l'alimentation DVFS est différente d'un point de fonctionnement autorisé (OPPi), alors l'alimentation DVFS est ajustée au point de fonctionnement autorisé le plus proche (OPPk).

5. Procédé selon l'une des revendications précédentes, dans lequel ladite instruction sécurisée (IS) est générée par l'environnement sécurisé (TEE) avant un démarrage de l'environnement non-sécurisé (REE).

6. Procédé selon l'une des revendications précédentes, dans lequel l'instruction sécurisée (IS) définit un point de fonctionnement tension-fréquence autorisé (OPPi) dédié à l'environnement sécurisé (TEE), et, si un traitement sécurisé est exécuté par l'environnement sécurisé (TEE), ledit ajustement de l'alimentation DVFS comprend :
- un ajustement de l'alimentation DVFS à ce point de fonctionnement autorisé (OPPi) dédié à l'environnement sécurisé (TEE) ; et
- une non-modification de l'alimentation DVFS de ce point de fonctionnement autorisé (OPPi) dédié à l'environnement sécurisé (TEE), en réponse à la requête (Rk) de modification de l'alimentation DVFS.

7. Procédé selon la revendication 6, dans lequel lorsque l'alimentation DVFS est ajustée au point de fonctionnement autorisé (OPPi) dédié à l'environnement sécurisé (TEE), la configuration précédente de l'alimentation DVFS est enregistrée, et lorsque le traitement sécurisé prend fin, la dernière configuration enregistrée est restaurée.

8. Procédé selon la revendication 7, dans lequel l'enregistrement de la configuration précédente et la restauration de la dernière configuration enregistrée sont faits par l'environnement sécurisé (TEE).

9. Système sur puce comprenant une alimentation du type ajustement dynamique de tension-fréquence, DVFS, un environnement sécurisé (TEE), un environnement non-sécurisé (REE) apte à générer une requête de modification de l'alimentation DVFS, et un module de gestion de commande d'alimentation DVFS (PMC), dans lequel :
- l'environnement sécurisé (TEE) est configuré pour générer une instruction sécurisée (IS) définissant au moins un point de fonctionnement tension-fréquence autorisé (OPPi) pour l'alimentation DVFS ; et
- le module de gestion de commande d'alimentation (PMC) est configuré pour ajuster de l'alimentation DVFS à un point de fonctionnement autorisé (OPPk), en réponse à une requête (Rk) de modification de l'alimentation DVFS par l'environnement non-sécurisé (REE).

10. Système sur puce selon la revendication 9, dans lequel l'environnement sécurisé (TEE) est configuré pour générer ladite instruction sécurisée (IS) assignant un label respectif (Li) aux points de fonctionnement autorisés (OPPi) pour l'alimentation DVFS, et dans lequel le module de gestion de commande d'alimentation (PMC) est configuré pour ajuster l'alimentation DVFS à un point de fonctionnement autorisé (OPPk) si la requête (Rk) de modification de l'alimentation DVFS comprend le label (Lk) de ce point de fonctionnement autorisé (OPPk).

11. Système sur puce selon la revendication 10, dans lequel le module de gestion de commande d'alimentation (PMC) est configuré pour ne pas ajuster l'alimentation DVFS si la requête (Rk) de modification de l'alimentation DVFS ne comprend pas le label (Li) d'un point de fonctionnement autorisé (OPPi).

12. Système sur puce selon la revendication 9, dans lequel le module de gestion de commande d'alimentation (PMC) est configuré pour ajuster l'alimentation DVFS au point de fonctionnement autorisé (OPPi) le plus proche d'un point de fonctionnement d'une requête (Rk) de modification de l'alimentation DVFS, en réponse à cette requête (Rk) de modification de l'alimentation DVFS.

13. Système sur puce selon l'une des revendications 9 à 12, dans lequel l'environnement sécurisé (TEE) est configuré pour générer ladite instruction sécurisée (IS) avant un démarrage de l'environnement non-sécurisé (REE).

14. Système sur puce selon l'une des revendications 9 à 13, dans lequel l'environnement non-sécurisé (REE) est configuré pour adresser la requête (Rk) de modification de l'alimentation DVFS au module de gestion de commande d'alimentation (PMC), le module de gestion de commande d'alimentation (PMC) n'étant configurable que par ladite instruction sécurisée (IS) de l'environnement sécurisé (TEE).

15. Système sur puce selon l'une des revendications 9 à 14, dans lequel le module de gestion de commande d'alimentation (PMC) est incorporé à l'environnement sécurisé (TEE) et l'environnement non-sécurisé (REE) est configuré pour adresser la requête (Rk) de modification de l'alimentation DVFS à l'environnement sécurisé (TEE).

16. Système sur puce selon l'une des revendications 9 à 15, dans lequel l'environnement sécurisé (TEE) est configuré pour générer l'instruction sécurisée (IS) définissant un point de fonctionnement tension-fréquence autorisé (OPPi) dédié à l'environnement sécurisé (TEE) pour l'alimentation DVFS, et, si un traitement sécurisé est exécuté par l'environnement sécurisé (TEE), le module de gestion de commande d'alimentation (PMC) est configuré pour :
- ajuster l'alimentation DVFS à ce point de fonctionnement autorisé (OPPi) dédié à l'environnement sécurisé (TEE) ; et
- ne pas modifier l'alimentation DVFS de ce point de fonctionnement autorisé (OPPi) dédié à l'environnement sécurisé (TEE), en réponse à une requête (Rk) de modification de l'alimentation DVFS.

17. Système sur puce selon la revendication 16, dans lequel l'environnement sécurisé (TEE) est configuré pour enregistrer la configuration précédente de l'alimentation DVFS, lorsque l'alimentation DVFS est ajustée à ce point de fonctionnement autorisé (OPPi) dédié, et pour restaurer la dernière configuration enregistrée lorsque le traitement sécurisé prend fin.

18. Appareil électronique, tel qu'un téléphone portable ou un ordinateur de bord de véhicule (APP), comprenant un système sur puce (SOC) selon l'une des revendications 9 à 17, ainsi qu'un dispositif d'alimentation en tension (PMIC) configuré pour fournir une tension d'alimentation (VAlm) commandée (ComAlm) par le module de gestion de commande d'alimentation (PMC).

19. Appareil électronique selon la revendication 18, comprenant en outre un module de communication sans-fil (BL1) capable de donner à un dispositif tiers un accès à l'environnement non-sécurisé (REE) du système sur puce (SOC).

## Patentansprüche

1. Verfahren zur Verwaltung einer Versorgung des Typs Dynamic Voltage and Frequency Scaling DVFS eines System-on-Chip, wobei das Verfahren eine Erzeugung, durch eine nicht gesicherte Umgebung (REE) des System-on-Chip, einer Änderungsanforderung (Rk) der DVFS-Versorgung und eine Verwaltung der Steuerung der DVFS-Versorgung umfasst, umfassend:
- eine Generierung, durch eine gesicherte Umgebung (TEE) des System-on-Chip, eines gesicherten Befehls (IS), der mindestens einen zugelassenen Spannungs-Frequenz-Betriebspunkt (OPPi) für die DVFS-Versorgung definiert; und
- eine Einstellung der DVFS-Versorgung an einem zugelassenen Betriebspunkt (OPPk) als Antwort auf die Änderungsanforderung (Rk) der DVFS-Versorgung.

2. Verfahren nach Anspruch 1, wobei den zugelassenen Betriebspunkten (OPPi) für die DVFS-Versorgung ein jeweiliges Label (Li) durch die gesicherte Umgebung (TEE) zugewiesen wird, und wobei die DVFS-Versorgung an einem genehmigten Betriebspunkt (OPPk) eingestellt wird, wenn die Änderungsanforderung (Rk) der DVFS-Versorgung das Label (Lk) dieses genehmigten Betriebspunkts (OPPk) umfasst.

3. Verfahren nach Anspruch 2, wobei die DVFS-Versorgung nicht eingestellt wird, wenn die Änderungsanforderung (Rk) der DVFS-Versorgung das Label (Li) eines genehmigten Betriebspunkts (OPPi) nicht umfasst.

4. Verfahren nach Anspruch 1, wobei, wenn die Änderungsanforderung (Rk) der DVFS-Versorgung von einem genehmigten Betriebspunkt (OPPi) unterschiedlich ist, die DVFS-Versorgung am nächsten genehmigten Betriebspunkt (OPPk) eingestellt wird.

5. Verfahren nach einem der vorangehenden Ansprüche, wobei der gesicherte Befehl (IS) von der gesicherten Umgebung (TEE) vor einem Start der nicht gesicherte Umgebung (REE) generiert wird.

6. Verfahren nach einem der vorangehenden Ansprüche, wobei der gesicherte Befehl (IS) einen für die gesicherte Umgebung (TEE) spezifischen genehmigten Spannungs-Frequenz-Betriebspunkt (OPPi) definiert und, wenn von der gesicherten Umgebung (TEE) eine gesicherte Verarbeitung ausgeführt wird, die Einstellung der DVFS-Versorgung umfasst:
- eine Einstellung der DVFS-Versorgung an diesem für die gesicherte Umgebung (TEE) spezifischen genehmigten Betriebspunkt (OPPi); und
- eine Nicht-Änderung der DVFS-Versorgung dieses für die gesicherte Umgebung (TEE) spezifischen genehmigten Betriebspunkts (OPPi) als Antwort auf die Änderungsanforderung (Rk) der DVFS-Versorgung.

7. Verfahren nach Anspruch 6, wobei, wenn die DVFS-Versorgung an diesem für die gesicherte Umgebung (TEE) spezifischen genehmigten Betriebspunkt (OPPi) eingestellt wird, die vorhergehende Konfiguration der DVFS-Versorgung gespeichert wird, und wenn die gesicherte Verarbeitung endet, die letzte Konfiguration wiederhergestellt wird.

8. Verfahren nach Anspruch 7, wobei das Speichern der vorhergehenden Konfiguration und die Wiederherstellung der letzten gespeicherten Konfiguration von der gesicherten Umgebung (TEE) durchgeführt werden.

9. System-on-Chip, umfassend eine Versorgung des Typs Dynamic Voltage and Frequency Scaling DVFS, eine gesicherte Umgebung (TEE), eine nicht gesicherte Umgebung (REE), die imstande ist, eine Änderungsanforderung der DVFS-Versorgung zu generieren, und ein Modul zur Verwaltung der Steuerung der DVFS-Versorgung (PMC), wobei:
- die gesicherte Umgebung (TEE) konfiguriert ist, um einen gesicherten Befehl (IS) zu generieren, der mindestens einen genehmigten Spannungs-Frequenz-Betriebspunkt (OPPi) für die DVFS-Versorgung generiert; und
- das Modul zur Verwaltung der Steuerung der Versorgung (PMC) konfiguriert ist, um die DVFS-Versorgung als Antwort auf eine Änderungsanforderung (Rk) der DVFS-Versorgung durch die nicht gesicherte Umgebung (REE) an einem genehmigten Betriebspunkt (OPPk) einzustellen.

10. System-on-Chip nach Anspruch 9, wobei die gesicherte Umgebung (TEE) konfiguriert ist, um den gesicherten Befehl (IS) zu generieren, der den zugelassenen Betriebspunkten (OPPi) für die DVFS-Versorgung ein jeweiliges Label (Li) zuweist, und wobei das Modul zur Verwaltung der Steuerung der Versorgung (PMC) konfiguriert ist, um die DVFS-Versorgung an einem genehmigten Betriebspunkt (OPPk) einzustellen, wenn die Änderungsanforderung (Rk) der DVFS-Versorgung das Label (Lk) dieses genehmigten Betriebspunkts (OPPk) umfasst.

11. System-on-Chip nach Anspruch 10, wobei das Modul zur Verwaltung der Steuerung der Versorgung (PMC) konfiguriert ist, um die DVFS-Versorgung nicht einzustellen, wenn die Änderungsanforderung (Rk) der DVFS-Versorgung das Label (Li) eines genehmigten Betriebspunkts (OPPi) nicht umfasst.

12. System-on-Chip nach Anspruch 9, wobei das Modul zur Verwaltung der Steuerung der Versorgung (PMC) konfiguriert ist, um die DVFS-Versorgung am nächsten genehmigten Betriebspunkt (OPPi) eines Betriebspunkts einer Änderungsanforderung (Rk) der DVFS-Versorgung als Antwort auf diese Änderungsanforderung (Rk) der DVFS-Versorgung einzustellen.

13. System-on-Chip nach einem der Ansprüche 9 bis 12, wobei die gesicherte Umgebung (TEE) konfiguriert ist, um den gesicherten Befehl (IS) vor einem Start der nicht gesicherten Umgebung (REE) zu generieren.

14. System-on-Chip nach einem der Ansprüche 9 bis 13, wobei die nicht gesicherte Umgebung (REE) konfiguriert ist, um die Änderungsanforderung (Rk) der DVFS-Versorgung an das Modul zur Verwaltung der Steuerung der Versorgung (PMC) zu schicken, wobei das Modul zur Verwaltung der Steuerung der Versorgung (PMC) nur durch den gesicherten Befehl (IS) der gesicherten Umgebung (TEE) konfigurierbar ist.

15. System-on-Chip nach einem der Ansprüche 9 bis 14, wobei das Modul zur Verwaltung der Steuerung der Versorgung (PMC) in die gesicherte Umgebung (TEE) inkorporiert ist und die nicht gesicherte Umgebung (REE) konfiguriert ist, um die Änderungsanforderung (Rk) der DVFS-Versorgung an die gesicherte Umgebung (TEE) zu schicken.

16. System-on-Chip nach einem der Ansprüche 9 bis 15, wobei die gesicherte Umgebung (TEE) konfiguriert ist, um den gesicherten Befehl (IS) zu generieren, der einen für die gesicherte Umgebung (TEE) spezifischen genehmigten Spannungs-Frequenz-Betriebspunkt (OPPi) für die DVFS-Versorgung definiert und, wenn von der gesicherten Umgebung (TEE) eine gesicherte Verarbeitung ausgeführt wird, das Modul zur Verwaltung der Steuerung der Versorgung (PMC) konfiguriert ist, um:
- die DVFS-Versorgung an diesem für die gesicherte Umgebung (TEE) spezifischen genehmigten Betriebspunkt (OPPi) einzustellen; und
- die DVFS-Versorgung dieses für die gesicherte Umgebung (TEE) spezifischen genehmigten Betriebspunkts (OPPi) als Antwort auf die Änderungsanforderung (Rk) der DVFS-Versorgung nicht zu ändern.

17. System-on-Chip nach Anspruch 16, wobei die gesicherte Umgebung (TEE) konfiguriert ist, um die vorhergehende Konfiguration der DVFS-Versorgung zu speichern, wenn die DVFS-Versorgung an diesem speziellen genehmigten Betriebspunkt (OPPi) eingestellt ist, und um die letzte gespeicherte Konfiguration wiederherzustellen, wenn die gesicherte Verarbeitung endet.

18. Elektronisches Gerät wie ein tragbares Telefon oder ein Bordcomputer eines Fahrzeugs (APP), umfassend ein System-on-Chip (SOC) nach einem der Ansprüche 9 bis 17 sowie eine Vorrichtung zur Versorgung mit Spannung (PMIC), die konfiguriert ist, um eine von dem Modul zur Verwaltung der Steuerung der Versorgung (PMC) gesteuerte (ComAlm) Versorgungsspannung (VAlm) bereitzustellen.

19. Elektronisches Gerät nach Anspruch 18, umfassend ferner ein drahtloses Kommunikationsmodul (BL1), das imstande ist, einer Drittvorrichtung einen Zugriff auf die nicht gesicherte Umgebung (REE) des System-on-Chip (SOC) zu geben.

## Claims

1. Method for managing a power supply of the dynamic voltage-frequency scaling DVFS type, of a system on chip, the method comprising generating, by a non-secure environment (REE) of the system on chip, a request (Rk) to modify the DVFS power supply and managing a DVFS power supply control comprising:
- generating, by a secure environment (TEE) of the system on chip, a secure instruction (IS) defining at least one authorised voltage-frequency operating point (OPPi) for the DVFS power supply; and
- adjusting the DVFS power supply to an authorised operating point (OPPk), in response to the request (Rk) to modify the DVFS power supply.

2. Method according to claim 1, wherein the authorised operating points (OPPi) for the DVFS power supply are assigned a respective label (Li) by the secure environment (TEE), and wherein the DVFS power supply is adjusted to an authorised operating point (OPPk) if the request (Rk) to modify the DVFS power supply comprises the label (Lk) of this authorised operating point (OPPk).

3. Method according to claim 2, wherein the DVFS power supply is not adjusted if the request (Rk) to modify the DVFS power supply does not comprise the label (Li) of an authorised operating point (OPPi).

4. Method according to claim 1, wherein, if the request (Rk) to modify the DVFS power supply is different from an authorised operating point (OPPi), then the DVFS power supply is adjusted to the closest authorised operating point (OPPk).

5. Method according to one of the preceding claims, wherein said secure instruction (IS) is generated by the secure environment (TEE) before the non-secure environment (REE) is initiated.

6. Method according to one of the preceding claims, wherein the secure instruction (IS) defines an authorised voltage-frequency operating point (OPPi) dedicated to the secure environment (TEE) and, if a secure processing is implemented by the secure environment (TEE), said adjustment of the DVFS power supply comprises:
- an adjustment of the DVFS power supply to this authorised operating point (OPPi) dedicated to the secure environment (TEE); and
- a non-modification of the DVFS power supply of this authorised operating point (OPPi) dedicated to the secure environment (TEE), in response to the request (Rk) to modify the DVFS power supply.

7. Method according to claim 6, wherein, when the DVFS power supply is adjusted to the authorised operating point (OPPi) dedicated to the secure environment (TEE), the previous configuration of the DVFS power supply is recorded and, when the secure processing ends, the last recorded configuration is restored.

8. Method according to claim 7, wherein the recording of the previous configuration and the restoration of the last recorded configuration are done by the secure environment (TEE) .

9. System on chip comprising a power supply of the dynamic voltage-frequency scaling DVFS type, a secure environment (TEE), a non-secure environment (REE) able to generate a request to modify the DVFS power supply, and a module (PMC) for managing a DVFS power supply control, wherein:
- the secure environment (TEE) is configured to generate a secure instruction (IS) defining at least one authorised voltage-frequency operating point (OPPi) for the DVFS power supply; and
- the module (PMC) for managing the power-supply control is configured to adjust the DVFS power supply to an authorised operating point (OPPk), in response to a request (Rk) to modify the DVFS power supply by the nonsecure environment (REE).

10. System on chip according to claim 9, wherein the secure environment (TEE) is configured to generate said secure instruction (IS) assigning a respective label (Li) to the authorised operating points (OPPi) for the DVFS power supply, and wherein the module (PMC) for managing the power-supply control is configured to adjust the DVFS power supply to an authorised operating point (OPPk) if the request (Rk) to modify the DVFS power supply comprises the label (Lk) of this authorised operating point (OPPk).

11. System on chip according to claim 10, wherein the module (PMC) for managing the power-supply control is configured not to adjust the DVFS power supply if the request (Rk) to modify the DVFS power supply does not comprise the label (Li) of an authorised operating point (OPPi) .

12. System on chip according to claim 9, wherein the module (PMC) for managing the power-supply control is configured to adjust the DVFS power supply to the authorised operating point (OPPi) closest to an operating point of a request (Rk) to modify the DVFS power supply, in response to this request (Rk) to modify the DVFS power supply.

13. System on chip according to one of claims 9 to 12, wherein the secure environment (TEE) is configured to generate said secure instruction (IS) before the non-secure environment (REE) is initiated.

14. System on chip according to one of claims 9 to 13, wherein the non-secure environment (REE) is configured to address the request (Rk) to modify the DVFS power supply to the module (PMC) for managing the power- supply control, the module (PMC) for managing the power- supply control being configurable only by said secure instruction (IS) of the secure environment (TEE).

15. System on chip according to one of claims 9 to 14, wherein the module (PMC) for managing the power-supply control is incorporated in the secure environment (TEE), and the non-secure environment (REE) is configured to address the request (Rk) to modify the DVFS power supply to the secure environment (TEE).

16. System on chip according to one of claims 9 to 15, wherein the secure environment (TEE) is configured to generate the secure instruction (IS) defining an authorised voltage-frequency operating point (OPPi) dedicated to the secure environment (TEE) for the DVFS power supply and, if a secure processing is implemented by the secure environment (TEE), the module (PMC) for managing the power-supply control is configured to:
- adjust the DVFS power supply to this authorised operating point (OPPi) dedicated to the secure environment (TEE); and
- not modify the DVFS power supply of this authorised operating point (OPPi) dedicated to the secure environment (TEE), in response to a request (Rk) to modify the DVFS power supply.

17. System on chip according to claim 16, wherein the secure environment (TEE) is configured to record the previous configuration of the DVFS power supply, when the DVFS power supply is adjusted to this dedicated authorised operating point (OPPi), and to restore the last recorded configuration when the secure processing ends.

18. Electronic apparatus, such as a mobile telephone or a computer on board a vehicle (APP), comprising a system on chip (SOC) according to one of claims 9 to 17, as well as a voltage supply device (PMIC) configured to supply a supply voltage (VAlm) controlled (ComAlm) by the module for managing the power-supply control (PMC).

19. Electronic apparatus according to claim 18, further comprising a wireless communication module (BL1) capable of giving a third-party device access to the non-secure environment (REE) of the system on chip (SOC).
